(19) Europäisches Patentamt
European Patent Office
Office européen des brevets

(11) **EP 3 023 249 A1**

(12) **EUROPEAN PATENT APPLICATION**
published in accordance with Art. 153(4) EPC

(43) Date of publication:
**25.05.2016 Bulletin 2016/21**

(51) Int Cl.:
**B32B 27/38** (2006.01)    **B32B 27/18** (2006.01)
**C03C 17/28** (2006.01)

(21) Application number: **14826096.1**

(22) Date of filing: **09.07.2014**

(86) International application number:
**PCT/JP2014/068263**

(87) International publication number:
**WO 2015/008672 (22.01.2015 Gazette 2015/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **17.07.2013   JP 2013148526**

(71) Applicant: **Asahi Glass Company, Limited**
**Tokyo 100-8405 (JP)**

(72) Inventors:
• **SUGIHARA Yosuke**
**Tokyo 100-8405 (JP)**

• **KODAIRA Hirokazu**
**Tokyo 100-8405 (JP)**
• **MORI Yusuke**
**Tokyo 100-8405 (JP)**
• **YONEDA Takashige**
**Tokyo 100-8405 (JP)**

(74) Representative: **Müller-Boré & Partner**
**Patentanwälte PartG mbB**
**Friedenheimer Brücke 21**
**80639 München (DE)**

(54) **ANTI-FOG ARTICLE**

(57)    An antifogging article having a high antifogging property and being excellent in persistence of the antifogging property is provided. The antifogging article having a substrate and a water absorbing layer on a surface of at least a part of the substrate, wherein the water absorbing layer comprises a cured epoxy resin as a main body, obtained by reacting a polyepoxide and a curing agent, and a surfactant having an HLB within a range of 6 to 18, the HLB being calculated by a Griffin method.

**Description**

FIELD

An embodiment of the present invention relates to an antifogging article, and in particular, an antifogging article having a high antifogging property and being excellent in persistence of the antifogging property.

BACKGROUND

Regarding a transparent substrate such as glass or plastic, when a substrate surface is at a temperature of dew-point or lower, minute water droplets adhere to the surface to scatter transmitted light, which impairs transparency, resulting in a so-called "fogging" state. As means for preventing fogging, various proposals have been made hitherto.
Specifically, there are known method such as (1) a method of lowering the surface tension of adhering water droplets by treating the substrate surface with a surfactant, (2) a method of making the substrate surface hydrophilic by adding a hydrophilic group to the substrate surface by using a hydrophilic resin or a hydrophilic inorganic chemical compound, (3) a method of maintaining the substrate surface to a temperature of dew-point or higher by installing a heater or the like on the substrate and heating by it, and (4) a method of providing a water absorbing resin layer on the substrate surface and removing the minute water droplets formed on the substrate surface by absorption, and/or decreasing atmospheric humidity on the substrate surface.
However, by the above method (1) or (2), a water film is formed on the formed film surface and therefore a change easily occurs in external appearance due to occurrence of distortion, forming water droplets and/or the like, when it is retained in a high-humidity environment for a long time, and it is difficult to keep the antifogging property over time. Further, in the method of (3), the antifogging performance can be sustained semipermanently, but the energy accompanying supplying electricity is constantly needed, and thus it is costly.
On the other hand, the method of (4) is regarded as a particularly excellent method as means for preventing fogging because an excellent antifogging property can be exhibited without requiring running costs and the antifogging property can be maintained over time. As such an antifogging technology using the method of (4), specifically, an antifogging article having an antifogging film including a water absorbing crosslinked resin layer obtained from polyepoxides and so on have been proposed (refer to Patent Reference 1).
Here, in the antifogging article to which the water absorbing resin layer is applied, occurrence of fogging in the antifogging article can be suppressed or delayed to a certain level, but when water condenses or adheres to the article beyond its water absorbing ability, fogging occurs. Hence, development of an antifogging article having a higher antifogging performance and having an antifogging film capable of keeping the higher antifogging property is expected.

RELEVANT REFERENCES

Patent References

Patent Reference1: WO 2007-052710

SUMMARY OF THE INVENTION

PROBLEMS TO BE SOLVED BY THE INVENTION

An object of the present invention is to provide an antifogging article having a high antifogging property and being excellent in persistence of the antifogging property.

MEANS FOR SOLVING THE PROBLEMS

The antifogging article of the present invention has the following configuration.

[1] An antifogging article having a substrate and a water absorbing layer on a surface of at least a part of the substrate, wherein the water absorbing layer comprises a cured epoxy resin as a main body, obtained by reacting a polyepoxide and a curing agent, and a surfactant having an HLB within a range of 6 to 18, the HLB being calculated by a Griffin method.
[2] The antifogging article according to [1], wherein the surfactant is a polyoxyalkylene alkyl ether type surfactant
[3] The antifogging article according to [1] or [2], wherein a content of the surfactant is 2.0 to 20.0 mass% with respect to total solid contents of the water absorbing layer.

[4] The antifogging article according to any one of [1] to [3], wherein a Martens hardness measured under measurement conditions of a load rate and unload rate F = 0.05 mN/5s and a creep C = 5s for the water absorbing layer after the antifogging article is left in an environment of 20°C and a relative humidity of 50% for 1 hour is 30 to 100 N/mm$^2$.

[5] The antifogging article according to any one of [1] to [4], wherein the polyepoxide is an aliphatic glycidyl ether-based polyepoxide.

[6] The antifogging article according to any one of [1] to [5], wherein the curing agent contains a polyamine compound having active hydrogen.

[7] The antifogging article according to any one of [1] to [6], wherein a film thickness of the water absorbing layer is 3 to 50 μm.

[8] The antifogging article according to any one of [1] to [7], wherein a water contact angle $CA_1$, measured at 1 second after dripping a water droplet of 1 μL onto the surface of the water absorbing layer after the antifogging article is left in an environment of 20°C and a relative humidity of 50% for 1 hour is 60 degrees or less, and a water contact angle $CA_{60}$ measured at 60 seconds after the dripping is 20 degrees or less.

EFFECT OF THE INVENTION

According to the present invention, it is possible to provide an antifogging article having a high antifogging property and being excellent in persistence of the antifogging property.

DETAILED DESCRIPTION

Hereinafter, embodiments of the present invention will be described. Note that the present invention should not be construed as limited to the following description. An antifogging article of the present invention includes a substrate and a water absorbing layer on a surface of at least a part of the substrate, wherein the water absorbing layer comprises a cured epoxy resin as a main body, obtained by reacting a polyepoxide and a curing agent, and a surfactant having an HLB within a range of 6 to 18, the HLB being calculated by a Griffin method.

The "polyepoxide" in this description means a chemical compound having two or more epoxy groups. The polyepoxide includes a low molecular chemical compound, oligomer, and polymer. Hereinafter, the polyepoxide will be referred also to as a main agent as necessary below.

The "cured epoxy resin" means a cured product having a structure in which the polyepoxide crosslinks by the curing agent and becomes three dimensional obtained by reaction of the polyepoxide and the curing agent, and/or a structure in which the polyepoxides linearly or three-dimensionally polymerize with each other due to action of the curing agent.

Hereinafter, the cured epoxy resin obtained by reaction of the polyepoxide and the curing agent will be referred to as a cured epoxy resin (A). The surfactant having an HLB within a range of 6 to 18, wherein the HLB is calculated by the Griffin method, will be referred to as a surfactant (B). Note that the HLB calculated by the Griffin method means a value calculated by the following Expression. In this description, unless otherwise stated, HLB means the value calculated by the Griffin method.

$$\text{HLB value} = 20 \times \text{total sum of formula weight of hydrophilic portion of surfactant/ molecular weight of surfactant}$$

In the antifogging article of the present invention, an antifogging property is exhibited by the water absorbing layer on the substrate. The water absorbing layer is mainly composed of the cured epoxy resin (A), has the water absorbing property by the three-dimensional molecular structure and preferably by the action of hydrophilic groups and thereby has the antifogging property, and can maintain the antifogging property for a long time. Further, the water absorbing layer contains the surfactant (B), so that even if the water absorption power of the water absorbing layer reaches a saturated state, a water film is formed on the surface of the water absorbing layer by the action of the surfactant (B), thereby exhibiting high antifogging property. Thus, the antifogging article of the present invention has the high antifogging property and is excellent in persistence of the antifogging property.

The antifogging article of the present invention includes the water absorbing layer on a surface of at least a part of the substrate. The surface of the substrate on which the water absorbing layer is formed is selected appropriately according to its application. Normally, the water absorbing layer is formed on any one of main surfaces of a pair of main surfaces which the substrate has. The antifogging article of the present invention is not particularly limited, regarding the other configuration, as long as it has the water absorbing layer on the substrate. For example, the antifogging article may have a substrate layer between the substrate and the water absorbing layer as will be described later.

Hereinafter, elements constituting the antifogging article will be described.

[Substrate]

The substrate used for the antifogging article of the present invention is not particularly limited as long as it is a substrate composed of a material for which addition of an antifogging property is generally desired. As the substrate, substrates composed of glass, plastic, metal, ceramics, and combinations of these (composite material, layered material, a structure a plurality of materials are closely bonded to each other by an intermediate film or the like, and the like) are exemplified, and a transparent substrate composed of glass or plastic, and a mirror and the like are more preferably exemplified.

As the glass, ordinary soda lime glass, aluminosilicate glass, borosilicate glass, non-alkali glass, quartz glass, and the like are exemplified. Further, physical tempering treatment or chemical strengthening treatment may be performed on the glass surface. Further, as the plastic, an acryl-based resin such as polymethyl methacrylate, an aromatic polycarbonate-based resin such as polyphenylene carbonate, an aromatic polyester-based resin such as polyethylene terephthalate (PET) and the like are exemplified, and among them, the polyethylene terephthalate (PET), polyphenylene carbonate, and the like are preferable. Among the above various substrates, a substrate composed of glass is particularly preferable in the present invention.

The shape of the substrate may be a flat plate, or the entire surface or a part thereof may have a curvature. The thickness of the substrate can be selected appropriately depending on the application of the antifogging article, and is preferably 0.1 to 10 mm in general.

Further, the substrate preferably has a reactive group on its surface. As the reactive group, a hydrophilic group is preferable, and as the hydrophilic group, a hydroxyl group is preferable. Further, an oxygen plasma treatment, a corona discharge treatment, an ozone treatment, or the like may be performed on the substrate to decompose and remove organic matters adhering to the surface, or form a minute uneven structure on the surface to thereby make the substrate surface hydrophilic. Note that the glass or metal oxide normally has a hydroxyl group on its surface, and from this viewpoint, the substrate is preferably glass.

Further, the substrate may be the one in which a metal oxide thin film of silica, alumina, titania, zirconia, or the like or a metal oxide thin film containing an organic group is provided on the surface of the substrate of glass or the like, for the purpose to increase adhesiveness to the water absorbing layer formed on its surface in the antifogging article of the present invention.

The metal oxide thin film can be formed using a metallic compound having a hydrolyzable group by a publicly known method such as sol-gel method. As the metallic compound, tetraalkoxysilane, tetraisocyanatesilane, oligomer thereof (that is, partially hydrolyzed condensate thereof) and the like are preferable.

The metal oxide thin film containing an organic group can be obtained by treating the surface of the substrate with an organic metal-based coupling agent. As the organic metal-based coupling agent, it is possible to use a silane-based coupling agent, titanium-based coupling agent, aluminum-based coupling agent, or the like, and the silane-based coupling agent is preferably used.

[Water absorbing layer]

In the antifogging article of the present invention, the water absorbing layer contains the cured epoxy resin (A) as a main body and further contains the surfactant (B).

Here, that the water absorbing layer contains the cured epoxy resin (A) as a main body means that the cured epoxy resin (A) is the component having the highest content in total solid contents constituting the water absorbing layer.

The cured epoxy resin (A) is obtained by reaction of a polyepoxide and a curing agent and/or reaction of polyepoxides. Therefore, the water absorbing layer in the antifogging article of the present invention is normally formed by preparing a water absorbing layer forming composition containing the polyepoxide and the curing agent being the raw materials of the cured epoxy resin (A) and the surfactant (B), arranging the water absorbing layer forming composition on a predetermined surface of the substrate, and then causing them to react with each other. The content ratio of the cured epoxy resin (A) in the water absorbing layer is indicated as a total content ratio of the polyepoxide and the curing agent in total solid contents of the water absorbing layer forming composition to be used.

(Cured epoxy resin (A))

The polyepoxide and the curing agent being the raw materials for obtaining the cured epoxy resin (A) are not particularly limited as long as they can form the cured epoxy resin. The water absorbing layer contains the cured epoxy resin and thereby extremely excellent in balance between the wear resistance represented by wear resistance of a film or the like and the water absorbing property.

As the polyepoxide, a polyepoxide normally used as a raw material of the cured epoxy resin can be used without any particular limitation. Concretely, a glycidyl ether-based polyepoxide, glycidyl ester-based polyepoxide, glycidyl amine-based polyepoxide, cyclic aliphatic polyepoxide, (metha)acrylic polymer with two or more epoxy groups introduced in a side chain and the like are exemplified. Note that the "(metha)acrylic" is a general term of methacrylic and acrylic.

The number of epoxy groups per molecule of the polyepoxide is not particularly limited as long as it is two or more on average, preferably 2 to 10, and more preferably 2 to 7.

The glycidyl ether-based polyepoxide has a structure in which phenolic hydroxyl groups of polyphenols having two or more phenolic hydroxyl groups or alcoholic hydroxyl groups of polyols having two or more alcoholic hydroxyl groups are substituted by glycidyloxy groups.

Similarly, the glycidyl ester-based polyepoxide has a structure in which carboxy groups of a polycarboxylic acid having two or more carboxy groups are substituted by glycidyloxy carbonyl groups, and the glycidyl amine-based polyepoxide has a structure in which hydrogen atoms coupled with nitrogen atoms of amine having two or more hydrogen atoms coupled with nitrogen atoms are substituted by glycidyl groups. Further, the cyclic aliphatic polyepoxide has a structure having an alicyclic hydrocarbon group (2,3-epoxycyclohexyl group or the like) in which an oxygen atom couples between adjacent carbon atoms of the ring.

Here, the water absorbing property of the cured epoxy resin mainly depends on the existing amounts of hydrophilic group such as a hydroxyl group and a hydrophilic chain (polyoxyethylene group or the like) mainly derived from the main agent. The water absorbing property also depends on the degree of cross linking in the cured epoxy resin. When the number of crosslinking points contained in the cured epoxy resin per certain unit amount is large, the cured epoxy resin becomes a dense three-dimensional network structure, and thus it is conceivable that the water absorbing property becomes low because spaces for water retention become small. Further, in general, it is said that the durability of the cured epoxy resin improves when the number of crosslinking points is large. On the other hand, when the number of crosslinking points contained per unit amount is small, spaces for water retention become large, and it is conceivable that the water absorbing property becomes high but the durability decreases.

The glass transition point of the cured epoxy resin is deeply related with the number of crosslinking points in the cured epoxy resin, and in general it is conceivable that a resin with a high glass transition point has a large number of crosslinking points contained per certain unit amount. Therefore, preferably in general, to increase the antifogging performance, the glass transition point of the cured epoxy resin is controlled to be low, or to increase the durability, the glass transition point of the cured epoxy resin is controlled to be high. Considering these, the glass transition point of the cured epoxy resin (A) which mainly forms the water absorbing layer is, although depending on the type of the cured epoxy resin, preferably -20 to 60°C, and more preferably -5 to 40°C.

Note that the glass transition point is a value measured in conformity to JIS K 7121. Specifically, it is a value measured by using a differential scanning calorimeter after providing a resin layer to be an analyte on the substrate and leaving it for 1 hour under an environment of 20°C and 50% RH. Note, the heating rate during measurement is 10°C /minute.

From the viewpoint of the water absorbing property, as the polyepoxide for obtaining the cured epoxy resin (A) having large spaces for water retention in the three-dimensional network structure while having an appropriate crosslinking density, a polyepoxide having no aromatic skeleton, namely, an aliphatic polyepoxide and/or an alicyclic polyepoxide is preferable, and the aliphatic polyepoxide is more preferable. Further, from the viewpoint of having more hydrophilic groups or hydrophilic chains (polyoxyethylene groups or the like), a glycidyl ether-based polyepoxide derived from polyphenols or derived from polyols is preferable, a glycidyl ether-based polyepoxide derived from an aliphatic polyol or an alicyclic polyol is preferable, and an aliphatic glycidyl ether-based polyepoxide is particularly preferable.

As the glycidyl ether-based polyepoxide derived from polyphenols, specifically, bisphenol diglycidyl ethers such as bisphenol-A diglycidyl ether, bisphenol-F diglycidyl ether, bis(4-glycidyl oxyphenyl), and the like, phenol-novolac diglycidyl ethers, cresol-novolac diglycidyl ethers, aromatic polycarboxylic acid polyglycidyl esters such as phthalic acid diglycidyl ester, and the like are exemplified. Among these aromatic polyepoxides, bisphenol-A diglycidyl ether and bisphenol-F diglycidyl ether are preferably used.

Examples of a raw material polyol of the glycidyl ether-based polyepoxide derived from polyols include polyol having no aromatic skeleton such as an aliphatic polyol or an alicyclic polyol, and the number of hydroxyl groups thereof per molecule is preferably 2 to 8, and more preferable 2 to 4. As the polyols, aliphatic polyols are preferably used. Examples of the aliphatic polyols include an alkane polyol, polyol containing ether oxygen atoms, sugar alcohol, polyoxyalkylene polyol, polyester polyol, and the like.

The polyoxyalkylene polyol can be obtained, for example, by causing ring opening addition polymerization of a monoepoxide such as a propylene oxide or ethylene oxide, to a polyol such as an alkane polyol, polyol containing ether oxygen atoms, or sugar alcohol having a relatively low molecular weight. Examples of the polyester polyol include chemical compounds having a structure in which an aliphatic diol and an aliphatic dicarboxylic acid are condensed, chemical compounds having a structure in which a cyclic ester is ring-opening polymerized, and the like.

As the glycidyl ether-based polyepoxide derived from aliphatic polyols, specifically, ethylene glycol diglycidyl ether, propylene glycol diglycidyl ether, dipropylene glycol diglycidyl ether, neopentyl glycol diglycidyl ether, 1,4-butanediol diglycidyl ether, 1,6-hexanediol diglycidyl ether, glycerol polyglycidyl ether, diglycerol polyglycidyl ether, trimethylolpropane polyglycidyl ether, sorbitol polyglycidyl ether, pentaerythritol polyglycidyl ether, polyethylene glycol diglycidyl ether, polyoxyproplene diol diglycidyl ether, polyoxypropylene triol triglycidyl ether, poly(oxyproplene/oxyethylene) triol triglycidyl ether, polyglycerol polyglycidyl ether and the like are exemplified.

Among them, glycerol polyglycidyl ether, diglycerol polyglycidyl ether, polyglycerol polyglycidyl ether, and sorbitol polyglycidyl ether are particularly preferable.

As the polyepoxide besides glycidyl ether-based polyepoxide, for example, hexahydrophthalic acid diglycidyl ester, tetrahydrophthalic acid diglycidyl ester, 3,4-epoxycyclohexylmethyl-3',4'-epoxycyclohexanecarboxylate, bis(3,4-epoxycyclohexylmethyl)adipate and the like are exemplified.

The molecular weight of the polyepoxide is preferably 100 to 4000, more preferably 300 to 3000, and particularly preferably 400 to 2500 from the viewpoint of the durability, antifogging property, external appearance and so on. Further, the epoxy equivalent of the polyepoxide (the number of grams [g/eq] of a resin containing epoxy groups equivalent to one gram) is preferably 120 to 200 g/eq, and more preferably 130 to 190 g/eq.

Note that in this description, the molecular weight means a mass average molecular weight (Mw) unless otherwise stated. Further, the mass average molecular weight (Mw) in this description means a mass average molecular weight measured by gel permeation chromatography (GPC) with polystyrene as a standard.

It is possible to use commercial products for the above polyepoxides. As such commercial products, specifically, in trade name both manufactured by Nagase ChemteX Corporation, Denacol EX-313 (molecular weight (Mw): 383, average number of epoxy groups: 2.0 group/molecule), Denacol EX-314 (molecular weight (Mw): 454, average number of epoxy groups: 2.3 group/molecule) which are glycerol polyglycidyl ether, Denacol EX-512 (molecular weight (Mw): 630, average number of epoxy groups: 4.1 group/molecule), Denacol EX-521 (molecular weight (Mw): 1294, average number of epoxy groups: 6.3 group/molecule) which are polyglycerol polyglycidyl ether, and the like are exemplified as the aliphatic glycidyl ether-based polyepoxide.

Denacol EX-1410 (molecular weight (Mw): 988, average number of epoxy groups: 3.5 group/molecule), Denacol EX-1610 (molecular weight (Mw): 1130, average number of epoxy groups: 4.5 group/molecule), Denacol EX-610U (molecular weight (Mw): 1408, average number of epoxy groups: 4.5 group/molecule) which are aliphatic polyglycidyl ether, and the like are exemplified. As the sorbitol polyglycidyl ether, Denacol EX-614B (molecular weight (Mw): 949, average number of epoxy groups: 6.1 group/molecule) and the like are exemplified. Note that one of the polyepoxides may be used independently, or two or more of them may be used in combination.

As the curing agent used together with the above polyepoxide for obtaining the cured epoxy resin (A), a curing agent being a curing agent of the type that undergoes polyaddition with the polyepoxide by reaction (hereinafter, referred to as a "polyaddition type curing agent") and being a chemical compound having two or more reactive groups which react with the epoxy groups contained in the polyepoxide, and a curing agent being a reaction catalyst (hereinafter, referred to as a "catalyst type curing agent") such as Lewis acid, and catalyzing a polymerization reaction of polyepoxides with each other and/or a polyaddition reaction between a polyepoxide and a polyaddition type curing agent, are exemplified. Note that while there are a thermosetting type and a light-curing type in the catalyst type curing agent, they are both treated as a catalyst type curing agent.

The polyaddition type curing agent and the catalyst type curing agent may be used independently, or both of them may be used in combination. Preferably, both of them are used in combination.

The polyaddition type curing agent to be used is not particularly limited as long as it is a chemical compound having two or more reactive groups which react with the epoxy groups contained in the polyepoxide and is a curing agent of the type that undergoes polyaddition with the polyepoxide by reaction.

As the reactive group which reacts with the epoxy group in the polyaddition type curing agent, an amino group having active hydrogen, carboxy group, thiol group, and the like are exemplified. More specifically, as the polyaddition type curing agent, a chemical compound having two or more amino groups having active hydrogen, a chemical compound having two or more carboxy groups, and a chemical compound having two or more thiol groups are preferable, and a chemical compound having two or more amino groups having active hydrogen is more preferably used. They may be used independently, or two or more of them may be used in combination.

Note that the amino group having active hydrogen means, specifically, a primary amino group indicated by $-NH_2$ or a secondary amino group indicated by $>NH$. In this description, active hydrogen which couples to an amino group will be referred to as "amine active hydrogen." Further, a chemical compound having an amino group having active hydrogen will be referred to as an amine compound having active hydrogen, and a chemical compound having two or more amino groups having active hydrogen will be referred to as a polyamine compound having active hydrogen. Here, the secondary amino group having a primary amino group on its terminal such as an N-amino alkyl substituted amino group or a hydrazinyl group, is counted as one as an amino group having active hydrogen. Moreover, in this description, unless otherwise stated, the "polyamine compound" means a polyamine compound having active hydrogen.

As the polyaddition type curing agent, polyamines, a polycarboxylic acid anhydride and polyamides can be used, and to obtain the cured epoxy resin (A) high in water absorbing property, a reactive chemical compound having no aromatic skeleton like the polyepoxide is preferable. As the polyaddition type curing agent, polyamines having no aromatic skeleton and a polycarboxylic acid anhydride having no aromatic skeleton are preferable, and polyamines having no aromatic skeleton are preferable. As the polyamines, polyamines having 2 to 4 amino groups are preferable, and as the polycarboxylic acid anhydride, a dicarboxylic acid anhydride, tricarboxylic acid anhydride, and tetracarboxylic acid anhydride are preferable.

As the polyamines having no aromatic skeleton, an aliphatic polyamine compound and an alicyclic polyamine compound are preferable, and the aliphatic polyamine compound is particularly preferable. As the polyamines, specifically, ethylene diamine, triethylenetetramine, tetraethylenepentamine, hexamethylene diamine, polyoxyalkylene polyamine, isophoronediamine, menthene diamine, 3,9-bis(3-aminopropyl)-2,4,8,10-tetraoxaspiro(5,5) undecane, and the like are exemplified.

The above polyoxyalkylene polyamine is a polyamine having a structure in which the hydroxyl groups of polyoxyalkylene polyol are substituted by amino groups, and for example, a chemical compound having 2 to 4 amino groups having a structure in which the hydroxyl groups of polyoxypropylene polyol having 2 to 4 hydroxyl groups are substituted by amino groups is exemplified. The molecular weight per amino group is preferably 1000 or less, and particularly preferably 500 or less.

As the polycarboxylic acid anhydride having no aromatic skeleton, for example, a succinic anhydride, methyltetrahydrophthalic anhydride, hexahydrophthalic anhydride, 4-methylhexahydrophthalic anhydride, and the like are exemplified.

It is also possible to use commercial products as the polyaddition type curing agent. As such commercial products, specifically, Jeffamine T-403 (trade name, manufactured by Huntsman Corporation, Mw: 390) and the like as a polyoxyalkylene triamine, and Polythiol QE-340M (trade name, manufactured by Toray Fine Chemicals) and the like as a polyether polythiol, are exemplified.

Regarding the compounding ratio of the polyepoxide and the polyaddition type curing agent as a raw material component of the cured epoxy resin (A) used in the present invention, when the reactive groups of the polyaddition type curing agent are groups which react with the epoxy groups by a ratio of 1:1, the equivalent ratio of the reactive groups of the polyaddition type curing agent relative to the epoxy groups derived from the polyepoxide is preferably a ratio of 0.6 to 1.5, and more preferably 0.7 to 1.0. In the case where the polyaddition type curing agent having the reactive groups which react with the epoxy groups by 1:1 is used, when the equivalent ratio of the reactive groups of the polyaddition type curing agent relative to the epoxy groups derived from the polyepoxide is in the above range, a cured epoxy resin (A) can be obtained which has a three-dimensional network structure moderately crosslinked so as to have high water absorbing property without decreasing the durability.

When the polyamine compound having active hydrogen is used as the polyaddition type curing agent in the present invention, it is preferable to use it such that the equivalent ratio of amine active hydrogen to the epoxy groups derived from the polyepoxide becomes 0.6 to 0.8. Similarly to the above, when the equivalent ratio of amine active hydrogen to the epoxy groups is in the above range, a cured epoxy resin (A) can be obtained which has a three-dimensional network structure moderately crosslinked so as to have high water absorbing property.

Note that the equivalent ratio of amine active hydrogen to the epoxy groups is preferably in the range similar to the above also when it is calculated for total solid contents contained in the water absorbing layer forming composition. More specifically, when the water absorbing layer forming composition which will be described below, contains various components other than the polyepoxide and the polyaddition type curing agent, for example, the coupling agent and the like, having epoxy groups and amino groups having active hydrogen, the total amount obtained by adding the amounts of epoxy groups and amine active hydrogen contained in these components to the amounts of epoxy groups and amine active hydrogen contained in the polyepoxide and the polyaddition type curing agent is preferably used for calculation of the equivalent ratio of amine active hydrogen relative to the epoxy groups to make it the same as the above range of the equivalent ratio. However, in components which will be described later, amine active hydrogen contained in a catalyst type curing agent such as imidazole does not basically cross link with the epoxy groups, and is therefore not included in the calculation of the above equivalent ratio.

As the curing agent used together with the polyepoxide when the cured epoxy resin (A) is obtained, the catalyst type curing agent can be exemplified other than the polyaddition type curing agent. The catalyst type curing agent may be used independently as the curing agent, and is preferably used in combination with the polyaddition type curing agent. As the catalyst type curing agent, any catalyst type curing agent can be used without any particular restriction as long as it is a reaction catalyst such as Lewis acid and catalyzes a polymerization reaction of polyepoxides with each other and/or a polyaddition reaction of a polyepoxide and a polyaddition type curing agent.

By using the catalyst type curing agent, an effect of accelerating the speed of cross linking by the individual polyepoxide or by the polyaddition reaction of the polyepoxide and the polyaddition type curing agent and an effect of reducing a defect occurring in a crosslinked region formed by the individual polyepoxide or the polyepoxide and the polyaddition type curing agent can be obtained. As one example of the defect of the crosslinked region, coloring of a cured epoxy resin due to deterioration of the crosslinked region by a heat load is exemplified.

As the catalyst type curing agent, specifically, curing catalysts such as tertiary amines, imidazoles, Lewis acids, onium salts, phosphines and the like are exemplified. More specifically, 2-methylimidazole, 2-ethyl-4-methylimidazole, tris(dimethylaminomethyl)phenol, boron trifluoride-amine complex, methyl p-toluenesulfonate, diphenyl iodonium hexafluorophosphate, triphenyl sulfonium hexafluorophosphate, and the like are exemplified. As the catalyst type curing agent, one of them may be used independently, or two or more of them may be used in combination.

Note that the onium salts such as diphenyl iodonium hexafluorophosphate and triphenyl sulfonium hexafluorophosphate exemplified above are catalyst type curing agents which decompose due to light such as ultraviolet rays or the like to generate a Lewis acid catalyst, and normally used as a catalyst type curing agent giving a cured epoxy resin of light-curing type

As the catalyst type curing agent used in the present invention, among them, imidazole compounds such as 2-methylimidazole and 2-ethyl-4-methylimidazole are preferable.

As the catalyst type curing agent, it is also possible to use commercial products. As such commercial products, for example, Adekaoptomer SP-152 (trade name, manufactured by ADEKA Corporation) and the like as a triarylsulfonium salt which is a catalyst type curing agent of light-curing type are exemplified.

The use amount of the catalyst type curing agent is preferably 1.0 to 20 mass%, more preferably 1 to 10 mass%, and particularly preferably 1 to 5 mass% relative to 100 mass% of the polyepoxide. When the use amount of the catalyst type curing agent relative to 100 mass% of the polyepoxide is 1.0 mass% or more, the reaction proceeds sufficiently, and sufficient water absorbing property and durability can be realized in the cured epoxy resin (A) to be obtained Further, when the use amount of the catalyst type curing agent relative to 100 mass% of the polyepoxide is 20 mass% or less, it is possible to easily suppress occurrence of the problem in external appearance such that residues of the catalyst type curing agent exist in the obtained cured epoxy resin to cause the cured epoxy resin (A) to change into yellow.

Here, the cured epoxy resin (A) is a component mainly constituting the water absorbing layer and a component contributing to exhibition of the water absorbing property. Accordingly, as the cured epoxy resin (A), a cured epoxy resin high in water absorbing property is preferable.

The water absorbing property of the cured epoxy resin can be indicated specifically by a saturated water absorption amount measured by the following method. The saturated water absorption amount of the cured epoxy resin (A) used for the water absorbing layer is preferably 120 mg/cm$^3$ or more, and more preferably 150 mg/cm$^3$ or more. When the saturated water absorption amount of the cured epoxy resin (A) takes the above values, the water absorbing layer can ensure a sufficient water absorbing property. On the other hand, from a viewpoint of preventing decrease in durability of the water absorbing layer, the saturated water absorption amount of the cured epoxy resin (A) is preferably 900 mg/cm$^3$ or less, and more preferably 500 mg/cm$^3$ or less.

<Method of measuring the saturated water absorption amount>

A cured epoxy resin layer (hereinafter, a "resin layer") to be an analyte is provided on a substrate, for example, a soda lime glass substrate of 3 cm x 4 cm x 2 mm thickness, which is left for 2 hours in a thermohygrostat under an environment of 10°C, 95 to 99% RH, and after it is taken out, an amount of water (I) of the entire substrate with the resin layer is measured by using a micro moisture analyzer. Moreover, an amount of water (II) is measured through the same procedure for only the substrate. A value obtained by dividing a value resulted from subtracting the amount of water (II) from the amount of water (I) by the volume of the resin layer is taken as the saturated water absorption amount. Note that the measurement of the amount of water is performed as follows by a micro moisture analyzer FM-300 (trade name, manufactured by Kett Electric Laboratory). A measurement sample is heated at 120°C, water emitted from the sample is adsorbed by molecular sieves in the micro moisture analyzer, and a change in mass of the molecular sieves is measured as the amount of water. Further, the end point of the measurement is a point when the change in mass per 25 seconds becomes equal to or less than 0.05 mg.

(Surfactant (B))

The water absorbing layer contains, in addition to the above cured epoxy resin (A), the surfactant (B) having an HLB within a range of 6 to 18, wherein the HLB is calculated by the Griffin method. The water absorbing layer contains the surfactant (B), whereby even if the water absorption amount of the water absorbing layer reaches saturation, a water film is formed on the surface thereof, thereby eliminating the decrease in antifogging property.

The surfactant (B) achieves the above function as long as its HLB falls within the range of 6 to 18. The range of HLB of the surfactant (B) is preferably 7 to 17, and more preferably 8 to 16. A surfactant having an HLB less than 6 is insufficient in water film formation on the surface and therefore cannot obtain sufficient antifogging effect, whereas a surfactant having an HLB over 18 is low in affinity with the cured epoxy resin and therefore has a problem of an increase in haze.

As the surfactant (B), nonionic surfactants such as surfactants having an HLB of 6 to 18 among polyoxyalkylene alkyl ether, polyoxyalkylene fatty acid ester, glycerine fatty acid ester, sorbitan fatty acid ester, sucrose fatty acid ester, polyoxyalkylene alkylamine, polyoxyalkylene alkylamide, polyoxyalkylene phenyl ether, polyoxyalkylene polycyclic phenyl ether, and the like are exemplified.

Among them, as the surfactant (B), polyoxyalkylene alkyl ether having an HLB of 6 to 18 is preferable in terms of performance of forming a water film due to a hydrophilic property. The number of carbons of alkylene in polyoxyalkylene alkyl ether is preferably 2 to 4, ethylene and propylene are preferable, and ethylene is particularly preferable in terms of performance of forming a water film due to a hydrophilic property.

As such polyoxyalkylene alkyl ether, specifically, a chemical compound expressed by the following expression (1) can be exemplified.

$$R^1 O[(EO)_a/(PO)_b]\text{- H} \ ...... \qquad (1)$$

In expression (1), EO represents an oxyethylene group ($-CH_2CH_2O-$), and PO represents an oxypropylene group ($-CH_2CH_2CH_2O-$). $R^1$ represents an alkyl group or an alkenyl group having 10 to 18 carbon atoms that may contain a linear chain, branched, or cyclic structure. "a" represents a number of 0 to 40, "b" represents a number of 0 to 20, and a + b > 0. However, HLB is 6 to 18. Note that in expression (1), EO and PO may be alternately or randomly bonded.

Among polyoxyalkylene alkyl ether expressed by expression (1), as $R^1$, a linear chain alkyl group having 10 to 16 carbon atoms is preferable in terms of performance of forming a water film due to a hydrophilic property. As a polyoxyalkylene part, a polyoxyethylene structure in which only EO is repeated so that 5 to 20 EOs are bonded, is preferable in terms of performance of forming a water film due to a hydrophilic property. As polyoxyalkylene alkyl ether, polyoxyethylene lauryl ether is particularly preferable. As the molecular weight of such a surfactant (B), about 300 to 2000 can be exemplified. They may be used independently, or two or more of them may be used in combination.

As the surfactant (B), it is also possible to use commercial products. As such commercial products, specifically, commercial products listed in the following Table 1 can be used.

[Table 1]

| Manufacturer/trade name | Part number | Chemical compound | HLB |
|---|---|---|---|
| Kao Corporation / Emulgen | 102KG | Polyoxyethylene lauryl ether | 6.3 |
| | 103 | | 8.1 |
| | 104P | | 9.6 |
| | 108 | | 12.1 |
| | 109P | | 13.6 |
| | 120 | | 15.3 |
| Nippon Nyukazai Co., Ltd. / Newcol | 2302 | Polyoxyethylene alkyl ($C_{12}C_{13}$) ether | 6.3 |
| | 2303 | | 8.3 |
| | 2305 | | 10.9 |
| | 2307 | | 12.6 |
| | 2308 | | 13.2 |
| | 2308-HE | | 13.5 |
| | 2310 | | 14 |
| | 2312 | | 14.5 |
| | 2314 | | 15.1 |
| | 2318 | | 16 |
| | 2320 | | 16.4 |
| | 2327(20) | | 17.2 |
| | 2330 | | 17.5 |

(continued)

| Manufacturer/trade name | Part number | Chemical compound | HLB |
|---|---|---|---|
| Daiichi Kogyo Co., Ltd. / DKS | NL-30 | Polyoxyethylene lauryl ether | 8.1 |
| | NL-40 | | 9.5 |
| | NL-50 | | 10.6 |
| | NL-60 | | 11.5 |
| | NL-70 | | 12.2 |
| | NL-80 | | 12.9 |
| | NL-90 | | 13.4 |
| | NL-100 | | 13.8 |
| | NL-110 | | 14.3 |
| | NL-180 | | 16.1 |
| | NL-250 | | 17 |
| Sanyo Chemical Industries, Ltd. / Emulmin | LS-80 | Polyoxyethylene lauryl ether | 13.1 |
| | LS-90 | | 13.6 |
| | NL-70 | | 12.4 |
| | NL-80 | | 13.1 |
| | NL-90 | | 13.6 |
| | NL-100 | | 14 |
| | NL-110 | | 14.4 |

The content of the surfactant (B) in the water absorbing layer is preferably 2.0 to 20.0 mass% with respect to total solid contents, and more preferably 3.0 to 14.0 mass%. Further, the content of the total amount of the cured epoxy resin (A) and an inorganic filler and a coupling agent described below to 100 parts by mass is preferably 2.5 to 22.0 parts by mass, and more preferably 3.5 to 16.0 parts by mass.

By setting the content of the surfactant (B) in the water absorbing layer to the above range, when water beyond the water absorbing ability of the cured epoxy resin (A) is supplied to the water absorbing layer, it becomes possible to keep the ability of forming a water film on the surface for a long time. Further, it is possible to keep the hardness of the water absorbing layer, for example, Martens hardness in a usable range, and also suppress the increase in haze.

(Arbitrary components)

The water absorbing layer in the antifogging article of the present invention can contain, as arbitrary components, various functional added components normally contained in the water absorbing layer, such as an inorganic filler, a coupling agent and/or its reaction components, other functional added components and so on within a range that does not impair the effects of the present invention, in addition to the cured epoxy resin (A) and the surfactant (B) which are essential components.

<Inorganic filler>

The inorganic filler is a component that can impart higher mechanical strength and heat resistance to the water absorbing layer by being added. Further, it is possible to decrease curing shrinkage of the resin when obtaining the cured epoxy resin (A), specifically, in curing reaction of the polyepoxide and the curing agent. As such an inorganic filler, a filler composed of a metal oxide is preferable. As the metal oxide, for example, silica, alumina, titania, and zirconia are exemplified, and among them silica is preferable.

Further, besides the filler composed of the above metal oxide, fillers composed of ITO (Indium Tin Oxide), ATO (Antimony Tin Oxide) can also be used. ITO, ATO have an infrared absorption property and therefore can impart an infrared absorbing property to the water absorbing layer. Accordingly, by using the filler composed of ITO, ATO, the antifogging effect by heat absorption can also be expected in addition to the water absorbing property.

The inorganic filler contained in the water absorbing layer is preferably particulate. A mean primary particle diameter thereof is preferably 300 nm or less, more preferably 100 nm or less, and particularly preferably 50 nm or less. When the mean primary particle diameter is 300 nm or less, a tendency for particles to aggregate in the composition containing this is not enhanced, and sedimentation of particles can be avoided. Further, when the water absorbing layer is formed of a composition containing this, generation of fogging due to scattering (haze) can be suppressed, and thus the above particle diameter is preferable in terms of maintaining transparency. Note that although a lower limit of the mean primary particle diameter is not particularly limited, it is possible to use particles of about 2 nm which can be manufactured by the current technology. Here, the mean primary particle diameter of particles means the one measured from an observation image under a transmission electron microscope.

Further, the compounding amount of the inorganic filler is preferably 0.5 to 95 parts by mass, and more preferably 1 to 90 parts by mass relative to 100 parts by mass of the total mass of the main agent and the curing agent of the cured epoxy resin (A). When the compounding amount of the inorganic filler relative to 100 parts by mass of the cured epoxy resin (A) is the lower limit value or more, the mechanical strength can be imparted to the water absorbing layer. Further, it is easy to suppress decrease in effect of decreasing curing shrinkage of the cured epoxy resin (A). Further, when the compounding amount of the inorganic filler is the upper limit value or less, the space for absorbing water can be secured sufficiently, and it is possible to easily increase the water absorbing property and the antifogging property.

Note that the silica preferably used as the inorganic filler, more preferably silica fine particles can be compounded in the later-described water absorbing layer forming composition as colloidal silica dispersed in water or an organic solvent such as methanol, ethanol, isobutanol, propylene glycol monomethyl ether, butyl acetate or the like. Examples of the colloidal silica include silica hydrosol dispersed in water and organo silica sol in which water is substituted by an organic solvent, and when it is compounded in the water absorbing layer forming composition, silica hydrosol or organo silica sol is used in accordance with a solvent which is preferably used for the composition. For example, when the solvent used for the water absorbing layer forming composition is an organic solvent, it is preferable to use organo silica sol using the same organic solvent as a dispersion medium

As such organo silica sol, commercial products can be used. As the commercial products, for example, organo silica sol IPA-ST (trade name, manufactured by Nissan Chemical Industries) in which silica fine particles having a mean primary particle diameter of 10 to 20 nm are dispersed in isopropyl by a ratio of 30 mass% as the content of $SiO_2$ relative to the total amount of the organo silica sol, organo silica sol MEK-ST (trade name, manufactured by Nissan Chemical Industries) in which the organic solvent of organo silica sol IPA-ST is changed from isopropyl alcohol to methyl ethyl ketone, organo silica sol NBAC-ST (trade name, manufactured by Nissan Chemical Industries) in which the organic solvent of organo silica sol IPA-ST is changed from isopropyl alcohol to butyl acetate, and the like can be exemplified. Note that when the colloidal silica is used as the silica fine particles, the amount of solvent compounded in the water absorbing layer forming composition is appropriately adjusted in consideration of the amount of solvent contained in the colloidal silica.

Further, the above inorganic filler may be compounded in the water absorbing layer forming composition as a silica precursor such as tetraethoxysilane, and exist in a coating as silica when forming the water absorbing layer. As such a silica precursor, silicate compounds such as tetramethoxysilane, monomethyltriethoxysilane, monomethyltrimethoxysilane, dimethyldimethoxysilane, dimethyldiethoxysilane and the like can be used besides the above tetraethoxysilane.

For alumina, titania, zirconia, and the like exemplified as the inorganic filler besides the above silica, an alkoxide and acetylacetonato can be used as their precursors, and particularly for zirconia, a zirconium chloride can also be used

<Coupling agent>

A coupling agent is a component added to the water absorbing layer forming composition and acting for improving adhesiveness between the water absorbing layer and the substrate in contact therewith or the base layer provided when necessary, when forming the water absorbing layer. Note that the coupling agent has a reactive group, the reactive group reacts with other components and so on constituting the water absorbing layer to thereby enhance the adhesiveness, so that the coupling agent compounded in the water absorbing layer forming composition exists in a slightly changed form after forming the water absorbing layer. The coupling agent will be described below as not being in a state existing in the water absorbing layer, but as a coupling agent to be added to the water absorbing layer forming composition.

When the coupling agent has a functiona group reactive to the main agent or the curing agent of the cured epoxy resin (A), the coupling agent can be used for a purpose to adjust the physical properties of the water absorbing layer besides the purpose to improve adhesiveness. From such viewpoint, the coupling agent preferably has a reactive group which can react with the main agent or the curing agent of the cured epoxy resin (A).

As the coupling agent, an organic metal-based coupling agent or a polyfunctional organic compound is preferable, and the organic metal-based coupling agent is particularly preferable. The organic metal-based coupling agent is a chemical compound having one or more bonds between a metal atom and a carbon atom, and preferably having one bond or two bonds between the metal atom and the carbon atom. As the organic metal-based coupling agent, for example, a silane-based coupling agent (hereinafter referred to as a silane coupling agent), titanium-based coupling agent, aluminum-based coupling agent, and the like are exemplified, and the silane coupling agent is preferable. These coupling agents preferably have a reactive group which can react with the reactive group contained in the main agent or the curing agent of the cured epoxy resin (A) and the reactive group remaining on the surface of the substrate or the later-described base layer.

The silane coupling agent is a chemical compound in which one or more hydrolyzable groups and one or more monovalent organic groups bond to a silicon atom (however, a terminal bonding to a silicon atom is a carbon atom), and one monovalent organic group is a functional organic group (organic group having a reactive group). As an organic group other than the functional organic group, an alkyl group having 4 or less carbon atoms is preferable. Preferably, there are two or three hydrolyzable groups bonding to a silicon atom. The silane coupling agent is preferably a chemical compound expressed by the following expression (2).

$$R^2R^3{}_cSiX_{3-c} \text{ ......} \qquad (2)$$

In the above expression (2), $R^2$ represents a monovalent functional organic group, $R^3$ represents an alkyl group having 4 or less carbon atoms, and "c" represents an integer of 0 or 1. $R^3$ is preferably a methyl group or an ethyl group, and particularly preferably a methyl group. X is a hydrolyzable group such as a chlorine atom, an alkoxy group, an acyl group, an amino group or the like, and an alkoxy group having 4 or less carbon atoms is particularly preferable.

As the monovalent functional organic group represented by $R^2$, an alkenyl group having an addition-polymerizable unsaturated group or an alkyl group having a reactive group is preferable. The alkyl group having the reactive group may be an alkyl group in which the reactive group is substituted by an organic group having a reactive group. The number of carbon atoms of such an alkyl group is preferably 1 to 4. As the reactive group, an epoxy group, amino group, mercapto group, ureide group, hydroxyl group, carboxy group, acryloxy group, methacryloxy group, isocyanate group, and the like are exemplified. Further, as the organic group having such a reactive group, a glycidyloxy group (glycidoxy group), epoxycyclohexyl group, alkyl amino group, dialkyl amino group, arylamino group, N-amino alkyl substituted amino group, and the like are exemplified. Among them, a silane coupling agent whose reactive group is an epoxy group, amino group, mercapto group, or ureide group is preferable.

As such silane coupling agent, for example, 2-(3,4-epoxycyclohexyl)ethyltrimethoxysilane, 3-glycidoxypropyltrimethoxysilane, 3-glycidoxypropyltriethoxysilane, 3-glycidoxypropylmethyldiethoxysilane, 3-methacryloxypropylmethyldimethoxysilane, 3-methacryloxypropyltrimethoxysilane, 3-acryloxypropyltrimethoxysilane, 3-isocyanatepropyltrimethoxysilane, N-(2-aminoethyl)-3-aminopropylmethyldimethoxysilane, N-(2-aminoethyl)-3-aminopropyltrimethoxysilane, 3-aminopropyltrimethoxysilane, 3-aminopropylmethyldimethoxysilane, N-phenyl-3-aminopropyltrimethoxysilane, 3-ureidopropyltriethoxysilane, 3-mercaptopropyltrimethoxysilane are exemplified.

Among them, 3-aminopropyltrimethoxysilane, 3-aminopropylmethyldimethoxysilane, N-(2-aminoethyl)-3-aminopropylmethyldimethoxysilane, N-(2-aminoethyl)-3-aminopropyltrimethoxysilane, 3 -glycidoxypropyltrimethoxysilane, 3-glycidoxypropyltriethoxysilane, 3-glycidoxypropylmethyldiethoxysilane, 3-methacryloxypropylmethyldimethoxysilane, 3-methacryloxypropyltrimethoxysilane, 3-acryloxypropyltrimethoxysilane, and the like are preferable.

In the present invention, among them, a silane coupling agent having an amino group such as 3-aminopropyltrimethoxysilane, 3-aminopropylmethyldimethoxysilane, N-(2-aminoethyl)-3-aminopropylmethyldimethoxysilane, or N-(2-aminoethyl)-3-aminopropyltrimethoxysilane, is particularly preferably used.

For the compounding amount of the coupling agent in the water absorbing layer forming composition, there is no lower limit because it is not an essential component. However, in order to sufficiently exhibit the effect of compounding the coupling agent, the mass ratio of the coupling agent to 100 parts by mass of the total mass of the main agent and the curing agent of the cured epoxy resin (A) in the water absorbing layer forming composition is preferably 5 to 40 parts by mass, and more preferably 10 to 30 parts by mass. The compounding amount of the coupling agent to the total amount of the water absorbing layer forming composition, for example, when using the silane coupling agent, is preferably 2 to 10 mass%, and more preferably 3 to 7 mass%.

Here, when the water absorbing layer forming composition contains a coupling agent having an amino group having active hydrogen as the coupling agent, regarding the equivalent ratio of amine active hydrogen relative to the epoxy groups, an equivalent ratio relative to the epoxy groups contained in the polyepoxide is calculated together with amine active hydrogen in the polyaddition type curing agent and amine active hydrogen contained in the coupling agent and is made to be in the above preferable range (0.6 to 0.8). Further, when the polyaddition type curing agent having a reactive group other than the amino group having active hydrogen and the coupling agent having an amino group having active hydrogen are used together, the total of the equivalent ratio of the active hydrogen contained in the reactive group of the polyaddition type curing agent relative to the epoxy groups contained in the polyepoxide and the equivalent ratio of the amine active hydrogen contained in the coupling agent relative to the epoxy groups is made to be in the above preferable range.

Similarly, when the water absorbing layer forming composition contains a coupling agent having an epoxy group as the coupling agent, regarding the equivalent ratio of amine active hydrogen or active hydrogen contained in the reactive groups relative to the epoxy groups, an equivalent ratio relative to the amine active hydrogen in the polyaddition type curing agent and the active hydrogen contained in the reactive group is calculated together with the epoxy groups contained in the polyepoxide and the epoxy groups contained in the coupling agent, and is made to be in the above preferable range.

<Other functional added components>

As other functional added components contained in the water absorbing layer, specifically, a leveling agent, defoamer, viscosity modifier, light stabilizer, antioxidant, ultraviolet absorbent and the like can be exemplified.

As the leveling agent, polydimethylsiloxane-based surface conditioner (as a commercial product, for example, BYK307 (trade name, manufactured by BYK-Chemie GmbH), acryl-based copolymer surface conditioner, fluorine-modified polymer-based surface conditioner, and the like are exemplified, and as the defoamer, organic defoamer such as silicone-based defoamer, higher alcohol, and the like are exemplified, and as the viscosity modifier, acryl copolymer, polycarboxylic acid amide, modified urea compound, and the like are exemplified.

As the light stabilizer, hindered amines, nickel complexes such as nickel bis(octyl phenyl) sulfide, nickel complex-3,5-di-tert-butyl-4-hydroxy benzyl phosphoric acid monoethylate, nickel dibutyl dithiocarbamate, and the like are exemplified. As the light stabilizer, bis-(1,2,2,6,6-pentamethyl-4-piperidyl) sebacate (as a commercial product, ADK STAB LA-72 (trade name, manufactured by ADEKA Corporation) as the hindered amines is preferable.

As the antioxidant, a phenolic antioxidant of the type suppressing oxidation of a resin by capturing and decomposing a peroxy radical, a phosphorus antioxidant and a sulfur antioxidant of the type suppressing oxidation of a resin by decomposing peroxide, and the like are exemplified, and in the present invention, preferably, the phenolic antioxidant is used. As a commercial product of the phenolic antioxidant, ADK STAB AO-50 (trade name, manufactured by ADEKA Corporation) and the like are exemplified.

As the ultraviolet absorbent, a conventionally publicly known ultraviolet absorbent, specifically, a benzophenone-based compound, triazine-based compound, benzotriazole-based compound, and the like are exemplified. Specifically, 2-(2-hydroxy-4-[1-octylcarbonylethoxy]phenyl)-4,6-bis(4-phenyl phenyl)-1,3,5-triazine; TTNUVIN 400 (trade name, manufactured by BASF SE) and the like are exemplified.

As each of the components, two or more of the exemplified chemical compounds may be used in combination. The contents of the various components in the water absorbing layer forming composition can be, regarding each component, 0.001 to 10 parts by mass relative to 100 parts by mass of the total mass of the main agent and the curing agent of the cured epoxy resin (A).

(Water absorbing layer forming composition)

The water absorbing layer in the antifogging article of the present invention is a water absorbing layer containing the cured epoxy resin (A) as a main body and the surfactant (B) as an essential component, obtained by reaction of the water absorbing layer forming composition containing the polyepoxide and the curing agent being the raw materials of the cured epoxy resin (A) and the surfactant (B) as essential components and containing the above-described various functional added components when necessary as arbitrary components.

The kinds and compounding amounts and so on of the various solid contents contained in the water absorbing layer forming composition are as mentioned above including a preferable aspect. The water absorbing layer forming composition normally contains a solvent to form the water absorbing layer uniformly and with good workability.

The reaction of the polyepoxide, the curing agent contained in the water absorbing layer forming composition and reactive components compounded as necessary is performed after they are applied as the water absorbing layer forming composition on an application surface (on the substrate or the base layer when the base layer is provided), but when the composition contains a solvent, these components may be caused to react in advance to a certain extent in the composition before it is applied on the application surface, and thereafter it may be applied on the application surface, dried, and subsequently further caused to react. When the polyepoxide and the curing agent are caused to react to a certain extent in the solvent in advance as the water absorbing layer forming composition in this manner, the reaction temperature for reacting in advance is preferably 30°C or higher because the curing reaction surely proceeds.

<Solvent>

The solvent used for the water absorbing layer forming composition is not particularly limited as long as it is a solvent having good solubility and dispersibility with respect to the compounded components including the polyepoxide and the curing agent being the raw materials of the cured epoxy resin (A), the surfactant (B), and the other arbitrary components and is a solvent inert to these compounded components, and specifically, alcohols, acetic esters, ethers, ketones, water, and the like are exemplified.

Note that when a protic solvent is used as the solvent, the solvent and the epoxy groups can react with each other to make it difficult for the cured epoxy resin (A) to be formed, depending on the type of the polyepoxide. Therefore, when the protic solvent is used, preferably, a solvent which does not easily react with the polyepoxide is selected. As usable protic solvents, ethanol, isopropyl alcohol, n-propyl alcohol, and the like are exemplified. Further, as solvents besides them, acetone, methyl ethyl ketone, butyl acetate, propylene carbonate, diethylene glycol dimethyl ether, diacetone alcohol, propylene glycol monomethyl ether, and the like are preferable.

One of these solvents may be used, or two or more of them may be used in combination. Further, the compounded components such as the polyepoxide, the curing agent, the surfactant (B) and so on are sometimes prepared as a mixture with a solvent. In such a case, the solvent contained in the mixture may be used as it is as the solvent in the water absorbing layer forming composition, and other than this, the same or different kind of solvent may be further added to the water absorbing layer forming composition.

Further, the amount of the solvent in the water absorbing layer forming composition is preferably 100 to 500 parts by mass, and more preferably 100 to 300 parts by mass relative to 100 parts by mass of the total mass of the total solid contents in the polyepoxide, the curing agent, the surfactant (B), and the other various compounded components which are arbitrarily compounded. Note that the total compounded amounts of the polyepoxide and the curing agent in the water absorbing layer forming composition is preferably 5 to 50 mass%, and more preferably 15 to 40 mass% relative to the total amount of the composition.

(Manufacture of the water absorbing layer)

The water absorbing layer in the antifogging article of the present invention is a layer obtained by applying the above water absorbing layer forming composition on the application surface (on the substrate or the base layer when the base layer is provided) and causing the reactive components contained in the composition to react.

The method of applying the water absorbing layer forming composition on the application surface is not particularly limited, and publicly known methods such as a flow coating method, dip coating method, spin coating method, spray coating method, flexo printing method, screen printing method, gravure printing method, roll coating method, meniscus coating method, die coating method, wiping method, and the like are applicable. The application thickness of the water absorbing layer forming composition is a thickness which makes the thickness of the water absorbing layer finally obtained by reaction of the reaction components in the composition fall within a predetermined range.

After the water absorbing layer forming composition is applied, the solvent is removed as necessary by drying, and a curing treatment is performed under conditions corresponding to the reaction components used, thereby making the water absorbing layer containing the cured epoxy resin (A) as a main body and the surfactant (B). As the conditions to remove the solvent by drying, specifically, 50 to 90°C and 5 to 15 minutes are exemplified. Further, as a reaction condition of the reaction components in the water absorbing layer forming composition, namely, the polyepoxide and the curing agent, specifically, a heat treatment at 50 to 120°C for about 10 to 60 minutes is exemplified. Further, when the light-curing resin of UV curing is used, processing such as performing UV irradiation of 50 to 1000 mJ/cm$^2$ for 5 to 10 seconds with a UV curing apparatus or the like is exemplified.

Here, to shorten the reaction time of the water absorbing layer forming composition, the reaction of the composition may be performed under a constant humidifying condition. As the humidifying condition, specifically, 40 to 80% RH is exemplified, and a condition of 50 to 80% RH is more preferable. Presenting more preferable reaction conditions together with temperature conditions, reaction conditions of about 50 to 80% RH, 70 to 100°C, and 5 to 30 minutes are exemplified. As further preferable conditions, reaction conditions of about 50 to 80% RH, 80 to 100°C, and 10 to 30 minutes are exemplified.

The film thickness of the water absorbing layer related to the antifogging article of the present invention is preferably 3 μm or more, more preferably 5 μm or more, and particularly preferably 10 μm or more. Thus, the necessary saturated water absorption amount becomes easily ensured. On the other hand, from the viewpoint of preventing a decrease in durability of the water absorbing layer, the film thickness of the water absorbing layer is preferably 50 μm or less, more preferably 40 μm or less, and particularly preferably 30 μm or less. Note that the antifogging performance required for the antifogging article differs depending on the application, and thus the design of the water absorbing layer such as the film thickness and the like may be changed appropriately in line with demanded performance.

Specifically presenting the water absorbing property of the water absorbing layer in the antifogging article of the present invention, the saturated water absorption amount measured by the method described for the above cured epoxy resin (A) is 50 mg/cm$^3$ or more, preferably 70 mg/cm$^3$ or more, and more preferably 100 mg/cm$^3$ or more.

The saturated water absorption amount is an evaluation index regarding the water absorbing property of the water absorbing layer. The water absorbing layer in the antifogging article of the present invention contains the surfactant (B) and thereby forms the water film on the surface of the water absorbing layer when a saturated water absorption amount or more of water is supplied, thereby making it possible to prevent fogging. In the water absorbing layer in the antifogging article of the present invention, most of the surfactant (B) exists inside the layer, and a proper amount of the surfactant (B) is considered to exist on the surface of the layer. Then, when a saturated water absorption amount or more of water is supplied to the water absorbing layer, a water film is considered to be formed on the surface of the water absorbing layer due to the action of the surfactant (B) existing on the surface. Further, when the surfactant (B) existing on the surface is consumed, the surfactant (B) existing inside is considered to sequentially rise to the surface at a speed suitable for forming the water film to keep the ability of forming the water film for a long time.

The ability of forming the water film on the surface of the water absorbing layer when a saturated water absorption amount or more of water is supplied to the water absorbing layer can be evaluated, for example, by a water contact angle $CA_1$, measured at 1 second and a water contact angle $CA_{60}$ measured at 60 seconds, after dripping a water droplet of 1 $\mu$L onto the surface of the water absorbing layer after the antifogging article is left in an environment of 20°C and a relative humidity of 50% for 1 hour. When the water film is formed, the water contact angle decreases, whereas when the water film is not formed, the water contact angle exhibits a value of a fixed value or larger.

When the $CA_1$ is 60 degrees or less and the $CA_{60}$ is 20 degrees or less, the water film is formed on the surface of the water absorbing layer when a saturated water absorption amount or more of water is supplied to the water absorbing layer, and therefore the water absorbing layer can be evaluated to have sufficient antifogging property. The $CA_1$, is more preferably 50 degrees or less and particularly preferably 40 degrees or less. Similarly, the $CA_{60}$ is more preferably 15 degrees or less and particularly preferably 12 degrees or less.

Further, as the water absorbing layer in the antifogging article of the present invention, such a water absorbing layer that can make an antifogging time defined below be 20 seconds or more is preferable, more preferably 60 seconds or more, and furthermore preferably 70 seconds or more. The antifogging time is time until fogging is recognized by visual observation when the surface of the water absorbing layer is held above a hot water bath of 40°C after the substrate with the water absorbing layer manufactured similarly to that used for measurement of the saturated water absorption amount is left in an environment of 20°C and 50%RH for 1 hour. Note that a soda lime glass on which an antifogging process has not been performed normally fogs in about 1 to 3 seconds in the above test.

Further, in the antifogging article of the present invention, a Martens hardness measured under measurement conditions of a load rate and unload rate F = 0.05 mN/5s and a creep C = 5s for the water absorbing layer after the antifogging article is left in an environment of 20°C and a relative humidity of 50% for 1 hour is preferably 30 to 100 N/mm². In this description, the Martens hardness means the Martens hardness measured under the above conditions unless otherwise stated.

When the Martens hardness of the water absorbing layer exceeds 100 N/mm², the surfactant (B) existing inside the water absorbing layer becomes difficult to rise to the surface of the water absorbing layer and is less likely to keep the ability of forming the water film. The Martens hardness is more preferably 90 N/mm² or less, and particularly preferable 80 N/mm² or less.

The Martens hardness of the water absorbing layer is preferably 30 N/mm² or more form the viewpoint of the mechanical strength and the durability, and more preferably 40 N/mm² or more. Here, though depending on the kind of the cured epoxy resin (A) and the processing condition when forming the water absorbing layer, the water absorbing layer in the antifogging article of the present invention is sometimes further promoted in curing even after being formed as the water absorbing layer, and increases in Martens hardness with time. Hence, regarding the curing state of the water absorbing layer, the state before the water absorbing layer is left, in the case where the rate of change in Martens hardness before and after the water absorbing layer is left for three days is within 5%, can be defined as a completely cured state. The preferable upper limit and lower limit of the above Martens hardness refer to the Martens hardness when the water absorbing layer has completely cured.

The haze in the antifogging article of the present invention is a value measured, for example, using a haze meter (manufactured by Gardner Laboratory, Inc., haze-gard plus) in conformity to JIS K 7361, and is preferably 0.50% or less, more preferably 0.40% or less, and particularly preferably 0.35% or less.

Further, the wear resistance of the water absorbing layer in the antifogging article of the present invention is a ΔH when measuring a haze change ΔH (%) using a wear ring CS-10F while the wear ring is brought into contact with the surface of the water absorbing layer of the antifogging article by 5130 type abrasion tester of Taber Industries and by rotating it 100 times while applying a load of 4.90 N thereon, in conformity to JIS R 3212 (vehicle-interior side), and is preferable 5.0% or less, and more preferably 4.0% or less.

(Base layer)

The antifogging article of the present invention may have a base layer between the substrate and the water absorbing layer in order to increase the durability of the water absorbing layer. The base layer is preferably a cured epoxy resin obtained by reaction of the polyepoxide and the curing agent, and a layer having as a main body a cured epoxy resin lower in water absorbing property as compared to the cured epoxy resin (A) mainly constituting the water absorbing layer. Hereinafter, the cured epoxy resin mainly constituting the base layer is called a cured epoxy resin (Ab). From this viewpoint, the cured epoxy resin (Ab) preferably has a saturated water absorption amount measured by the above method of 10 mg/cm$^3$ or less, and more preferably 8 mg/cm$^3$ or less. On the other hand, from the viewpoint of decreasing the difference in degree of expansion and contraction between the base layer and the water absorbing layer, the saturated water absorption amount of the cured epoxy resin (Ab) is preferably 1 mg/cm$^3$ or more, and more preferably 3 mg/cm$^3$ or more.

The water absorbing layer tends to decrease in adhesiveness on an adhesive interface due to factors such as accumulation of stress strain in the adhesive interface by repetition of large expansion and contraction accompanying the high water absorbing property, arrival of various types of ion components taken in together with water at the adhesive interface, and moreover elution of ion components from the substrate to the interface by the influence of water arrived at the adhesive interface. Accordingly, when the base layer having a lower water absorbing property than the water absorbing layer is provided between the substrate and the water absorbing layer, the adhesiveness with the substrate interface is improved and the peeling resistance improves, making it possible to exhibit more excellent durability due to that the stress strain accumulated in the adhesive interface with the substrate is alleviated owing to the base layer having a small degree of expansion and contraction due to the low water absorbing property, and it has an operation to suppress water and ion components from arriving at the adhesive interface with the substrate.

The film thickness of the base layer is preferably 2 μm or more, and more preferably 3 μm or more. When the film thickness of the base layer is 2 μm or more, it becomes possible to prevent peeling of the water absorbing layer together with the base layer from the substrate. Further, also from a reason of alleviating the stress occurring in the interface due to expansion and contraction of the water absorbing layer, the film thickness of the base layer is more preferably 3 μm or more. Further, the film thickness of the base layer is preferably 8 μm or less, and more preferably 6 μm or less from the viewpoint of reducing material costs.

The base layer is composed of the cured epoxy resin (Ab) as a main body. The base layer may contain, in addition to the cured epoxy resin (Ab), the same components as those that the water absorbing layer contains in addition to the cured epoxy resin (A).

As described above, in general, in order to increase the water absorbing performance of a resin layer composed of a cured epoxy resin, preferably, the glass transition point of the cured epoxy resin is controlled to be low, and in order to increase the durability, the glass transition point of the cured epoxy resin is controlled to be high. Considering these, the glass transition point of the cured epoxy resin (Ab) is, although depending on the kind of the cured epoxy resin, a temperature higher than the glass transition point of the cured epoxy resin (A) and is preferably 40 to 150°C, and more preferably 40 to 120°C.

As the polyepoxide for obtaining the cured epoxy resin (Ab), the same polyepoxide as the polyepoxide for obtaining the cured epoxy resin (A) is usable. However, in order for a low water absorbing property, a polyepoxide having an aromatic skeleton is preferable, and a glycidyl ether-based polyepoxide derived from polyphenols is preferable. It is also possible to use commercial products as the polyepoxides in order to obtain the cured epoxy resin (Ab). As the commercial products, jER828 (trade name, manufactured by Mitsubishi Chemical Corporation, molecular weight (Mw): 340, average number of epoxy groups: about 2 group/molecule) as the bisphenol-A diglycidyl ether, ADEKA Resin EP4901 (trade name, manufactured by ADEKA Corporation) as the bisphenol-F diglycidyl ether, and the like are exemplified.

As the curing agent in order to obtain the cured epoxy resin (Ab), a polyaddition type curing agent and/or a catalyst type curing agent is exemplified. As the polyaddition type curing agent in order to obtain the cured epoxy resin (Ab), the same polyaddition type curing agent as the polyaddition type curing agent in order to obtain the cured epoxy resin (A) is usable.

When the polyepoxide having an aromatic skeleton is used as the raw material of the cured epoxy resin (Ab), the polyaddition type curing agent does not need to have the aromatic skeleton. As the polyaddition type curing agent having no aromatic skeleton, the same curing agent as the above-described polyaddition type curing agent having no aromatic skeleton can be used Further, as the polyaddition type curing agent having an aromatic skeleton, a polyamine compound having an aromatic skeleton, an aromatic polycarboxylic acid anhydride and the like are exemplified. As concrete polyamine compounds having an aromatic skeleton, for example, phenylenediamine, xylylenediamine, diaminodiphenylmethane and the like are exemplified, and as the aromatic polycarboxylic acid anhydride, for example, a phthalic anhydride, trimellitic anhydride, pyromellitic anhydride and the like are exemplified. As the polyaddition type curing agent in order to obtain the cured epoxy resin (Ab), one of them may be used independently, or two or more of them may be used in combination.

Regarding the compounding ratio of the polyepoxide and the polyaddition type curing agent which are raw material components of the cured epoxy resin (Ab), when the reactive groups of the polyaddition type curing agent are groups which react with the epoxy groups by the ratio of 1:1, a ratio which makes the equivalent ratio of the reactive groups of the polyaddition type curing agent relative to the epoxy groups derived from the polyepoxide be 0.8 to 1.5 is preferable, and 1.0 to 1.5 is more preferable. In the case where a polyamine compound having active hydrogen is used as the polyaddition type curing agent, it is preferably used to make the equivalent ratio of the amine active hydrogen relative to the epoxy groups derived from the polyepoxide be 0.5 to 1.5, and more preferably used to make the equivalent ratio be 1.0 to 1.5.

Note that in the manufacture of the cured epoxy resin (Ab), it is also possible to use a catalyst type curing agent as the curing agent. As the catalyst type curing agent, the same catalyst type curing agent as that described for the cured epoxy resin (A) can be used, and its compounding amount can be made the same.

The base layer can be manufactured by preparing a base layer forming composition containing total solid contents and a solvent before reaction similarly to the water absorbing layer, applying this on the surface of the substrate, and performing dry and reaction. The curing reaction of the base layer may be performed simultaneously with the curing reaction of the water absorbing layer. Providing the base layer as described above improves the durability while keeping the above antifogging ability, Martens hardness, wear resistance and haze in the antifogging article.

(Application of the antifogging article)

The antifogging article of the present invention is used preferably in an application as a commercial refrigerator with a transparent door and an article for transportation apparatus. As the article for transportation apparatus, preferably, a body, a window glass (windshield, side glass, rear glass), a mirror, and the like of electric train, automobile, boat, aircraft, or the like are exemplified.

The antifogging article of the present invention can eliminate adverse effects of fogging or the like induced by water since the surface of the water absorbing layer has an excellent antifogging property. Further, the above water absorbing layer is excellent also in durability, and therefore can keep the antifogging property also for a long-term service under various use conditions including use of, for example, outdoor use as the article for transportation apparatus, in particular, use of the vehicle door glass required to have wear resistance because of a getting-on and -off action, or the commercial refrigerator with a transparent door whose opening/closing is frequently performed.

EXAMPLE

Hereinafter, the present invention will be described specifically by examples, but the invention is not limited to these examples. Note that Examples 1 to 10 are examples and Examples 11 to 15 are comparative examples.

Abbreviations and physical properties of chemical compounds used in examples and comparative examples are summarized below. Note that Denacol... is a trade name by Nagase ChemteX Corporation, Emulgen ... is a trade name by Kao Corporation, and DKS ... is a trade name by Daiichi Kogyo Co., Ltd.

(1) Polyepoxide

(1-1) Glycerol polyglycidyl ether

Denacol EX-313 (Mw: 383, average number of epoxy groups: 2.0 group/molecule)
Denacol EX-314 (Mw: 454, average number of epoxy groups: 2.3 group/molecule)

(1-2) Polyglycerol polyglycidyl ether

Denacol EX-521 (Mw: 1294, average number of epoxy groups: 6.3 group/molecule)

(2) Surfactant

(2-1) Surfactant (B): polyoxyethylene lauryl ether having an HLB of 6 to 18

Emulgen-102KG (HLB6.3)
DKS NL-30 (HLB 8.1)
Emulgen-104P (HLB 9.6)
Emulgen-108 (HLB 12.1)
Emulgen-120 (HLB 15.3)

(2-2) Surfactant (polyoxyethylene lauryl ether) having an HLB outside a range of 6 to 18 DKS NL-15 (HLB 5.0)

Emulgen-130K (HLB18.1)

Emulgen-150 (HLB18.4)

(3) Various additives

KBM-602 (trade name, manufactured by Shin-Etsu Chemical Co., Ltd.): N-(2-aminoethyl)-3-aminopropylmethyldimethoxysilane

[Example 1]

(Preparation of the water absorbing layer forming composition)

In a glass container in which a stirrer and a thermometer were set, 8.45 g of ethanol (manufactured by JUNSEI CHEMICAL CO., LTD.), 4.5 g of glycerol polyglycidyl ether (Denacol EX-314), and 1.15 g of isophoronediamine (manufactured by Tokyo Chemical Industries) were put and stirred at 25°C for 3 hours. Subsequently, 1.5 g of N-(2-aminoethyl)-3-aminopropylmethyldimethoxysilane (KBM-602) and 0.25 g of polyoxyethylene lauryl ether (Emulgen-104P, HLB 9.6) were added and stirred at 25°C for 1 hour, thereby obtaining a water absorbing layer forming composition 1.

(Manufacture of the antifogging article)

On a dried clean glass substrate (100 mm x 100 mm x 2 mm) whose surface was polished and cleaned with cerium oxide, the water absorbing layer forming composition 1 obtained in the above was applied by spin coating, and it was heated at 100°C for 1 hour, thereby obtaining an antifogging article having a water absorbing layer having a film thickness of 20 $\mu$m.

[Example 2]

A water absorbing layer forming composition 2 was manufactured similarly to Example 1 except that 4.5 g of Denacol EX-314 was changed to 2.5 g of Denacol EX-313 and 2.0 g of Denacol EX-521, and this was used to obtain an antifogging article having a water absorbing layer having a film thickness of 20 $\mu$m similarly to Example 1.

[Example 3]

A water absorbing layer forming composition 3 was manufactured similarly to Example 1 except that 4.5 g of Denacol EX-314 was changed to 4.5 g of Denacol EX-521, and this was used to obtain an antifogging article having a water absorbing layer having a film thickness of 20 $\mu$m similarly to Example 1.

[Example 4]

A water absorbing layer forming composition 4 was manufactured similarly to Example 1 except that 0.25 g of polyoxyethylene lauryl ether (Emulgen-104P) was changed to 0.25 g of polyoxyethylene lauryl ether (Emulgen-102KG, HLB 6.3), and this was used to obtain an antifogging article having a water absorbing layer having a film thickness of 20 $\mu$m similarly to Example 1.

[Example 5]

A water absorbing layer forming composition 5 was manufactured similarly to Example 1 except that 0.25 g of polyoxyethylene lauryl ether (Emulgen-104P) was changed to 0.25 g of polyoxyethylene lauryl ether (Emulgen-108, HLB 12.1), and this was used to obtain an antifogging article having a water absorbing layer having a film thickness of 20 $\mu$m similarly to Example 1.

[Example 6]

A water absorbing layer forming composition 6 was manufactured similarly to Example 1 except that 0.25 g of polyoxyethylene lauryl ether (Emulgen-104P) was changed to 0.25 g of polyoxyethylene lauryl ether (Emulgen-120, HLB 15.3), and this was used to obtain an antifogging article having a water absorbing layer having a film thickness of 20 $\mu$m similarly to Example 1.

[Example 7]

A water absorbing layer forming composition 7 was manufactured similarly to Example 1 except that 0.25 g of polyoxyethylene lauryl ether (Emulgen-104P) was changed to 0.25 g of polyoxyethylene lauryl ether (DKS NL-30, HLB 8.1), and this was used to obtain an antifogging article having a water absorbing layer having a film thickness of 20 μm similarly to Example 1.

[Example 8]

A water absorbing layer forming composition 8 was manufactured similarly to Example 1 except that the amount of polyoxyethylene lauryl ether (Emulgen-104P, HLB 9.6) was changed from 0.25 g to 0.50 g, and this was used to obtain an antifogging article having a water absorbing layer having a film thickness of 20 μm similarly to Example 1.

[Example 9]

The water absorbing layer forming composition 1 obtained similarly to Example 1 was used to obtain an antifogging article similarly to Example 1 except that the film thickness of the water absorbing layer was changed from 20 μm to 5 μm.

[Example 10]

The water absorbing layer forming composition 1 obtained similarly to Example 1 was used to obtain an antifogging article similarly to Example 1 except that the film thickness of the water absorbing layer was changed from 20 μm to 40 μm.

[Example 11]

A water absorbing layer forming composition 11 was manufactured similarly to Example 1 except that 0.25 g of polyoxyethylene lauryl ether (Emulgen-104P, HLB 9.6) was changed to 0.25 g of polyoxyethylene lauryl ether (DKS NL-15, HLB 5.0), and this was used to obtain an antifogging article having a water absorbing layer having a film thickness of 20 μm similarly to Example 1.

[Example 12]

A water absorbing layer forming composition 12 was manufactured similarly to Example 1 except that 0.25 g of polyoxyethylene lauryl ether (Emulgen-104P, HLB 9.6) was changed to 0.25 g of polyoxyethylene lauryl ether (Emulgen-130K, HLB 18.1), and this was used to obtain an antifogging article having a water absorbing layer having a film thickness of 20 μm similarly to Example 1.

[Example 13]

A water absorbing layer forming composition 13 was manufactured similarly to Example 1 except that 0.25 g of polyoxyethylene lauryl ether (Emulgen-104P, HLB 9.6) was changed to 0.25 g of polyoxyethylene lauryl ether (Emulgen-150, HLB 18.4), and this was used to obtain an antifogging article having a water absorbing layer having a film thickness of 20 μm similarly to Example 1.

[Example 14]

In a glass container in which a stirrer and a thermometer were set, 7.9 g of ethanol, 5.7 g of pure water, and 3.6 g of S-LEC KX-5 (manufactured by Sekisui Chemical Co., Ltd., trade name: polyvinyl acetal resin, solid content concentration: 8 mass%) were put and stirred at 25°C for 1 hours. Subsequently, 0.01 g of polyoxyethylene lauryl ether (Emulgen-104P, HLB 9.6) was added and stirred at 25°C for 1 hour, thereby obtaining a water absorbing layer forming composition 14. The obtained water absorbing layer forming composition 14 was applied by spin coating, and it was heated at 100°C for 1 hour, thereby obtaining an antifogging article having a water absorbing layer having a film thickness of 5 μm.

[Example 15]

In a glass container in which a stirrer and a thermometer were set, 3.2 g of 1-ethoxypropanol, 0.6 g of 1-butanol, 2.7 g of tetramethoxysilane, 1.5 g of 2-propyl alcohol, 3.8 g of colloidal silica (manufactured by Nissan Chemical Industries, Ltd., trade name: IPA-ST, solid content concentration: 30 mass%), 3.0 g of pure water, and 0.2 g of 10 mass% of nitric acid solution were put and stirred at 25°C for 1 hour. Subsequently, 0.06 g of polyoxyethylene lauryl ether (Emulgen-104P, HLB 9.6) was added and stirred at 25°C for 1 hour, thereby obtaining a water absorbing layer forming composition 15. The obtained water absorbing layer forming composition 15 was applied by spin coating, and it was heated at 100°C for 1 hour, thereby obtaining an antifogging article having a water absorbing layer having a film thickness of 0.5 $\mu$m.

[Evaluation item]

Evaluation of the antifogging article obtained in each example was performed as follows.

(1) Measurement of the film thickness

A cross-sectional image of the antifogging article was taken with a scanning electron microscope (manufactured by Hitachi, Ltd, S4300), and the film thickness of the water absorbing layer was measured.

(2) Haze

The haze (%) of the antifogging article was measured using a haze meter (manufactured by Gardner Laboratory, Inc., haze-gard plus) in conformity to JIS K 7361.

(3) Wear resistance

Measurement was performed in conformity to JIS R 3212 (vehicle-interior side). In the 5130 type abrasion tester of Taber Industries, a wear ring CS-10F was used. By bringing the wear ring into contact with the surface of the water absorbing layer of the antifogging article and rotating it 100 times while applying a load of 4.90 N thereon, the haze change $\Delta$H (%) was measured.

(4) Martens hardness

After the antifogging article was left in an environment of 20°C and a relative humidity of 50% for 1 hour, the Martens hardness was measured using a micro hardness testing instrument (Fischer Technology, Inc. picodentor) under conditions of a load rate and unload rate F = 0.05 mN/5s and a creep C = 5s.

(5) Antifogging performance

For the antifogging article left under an environment of 20°C and a relative humidity of 50% for 1 hour, the surface of the water absorbing layer was held above a hot water bath of 40°C and whether it was fogged or not was determined by visual observation after 120 seconds, and the determination was regarded as the evaluation of the antifogging performance.

(6) Water contact angle

The antifogging article was left under an environment of 20°C and a relative humidity of 50% for 1 hour, then a water droplet of 1 $\mu$L was dripped onto the surface of the water absorbing layer, and a water contact angle measured at 1 second ($CA_1$) and a water contact angle at 60 seconds ($CA_{60}$) thereafter were measured.

The evaluation results are listed in Table 2 together with the main components, amounts and so on contained in the water absorbing layer forming compositions. Note that in Table 2, the ratio (%) of the surfactant indicates the content ratio (mass%) of the surfactant in total solid contents when the water absorbing layer forming composition was formed into the water absorbing layer. Here, in total solid contents when the water absorbing layer forming composition was formed into the water absorbing layer, regarding the amount of the silane coupling agent, the value obtained by multiplying the addition amount to the water absorbing layer forming composition by the condensation rate (78%), for example, 1.5 x 0.78 = 1.17 (g) in Example 1 was regarded as the solid content. Regarding the other components, the amount (g) listed in Table 2 was regarded as the solid content as it was, or regarding the diluted component, the value obtained by multiplying the amount (g) by the solid content concentration was regarded as solid content. Further, the combination of Denacol EX-314 and isophoronediamine was indicated as "EP1", the combination of Denacol EX-313, Denacol EX-521, and isophoronediamine was indicated as "EP2", the combination of Denacol EX-521 and isophoronediamine was indicated as "EP3" in Table 2. "KX-5" indicates S-LEC KX-5. Further, the main component in the water absorbing layer forming composition in Example 15 was listed as "silica" and the amount of the condensate (condensation rate 39%) of the silane compound was indicated.

[

Table 2]

| | Water absorbing layer forming composition | | | | | | | | Evaluation | | | | | | |
| --- | --- | --- | --- | --- | --- | --- | --- | --- | --- | --- | --- | --- | --- | --- | --- |
| | Main component | | Surfactant | | | Silane coupling agent | Inorganic filler | | Film thickness [μm] | Haze [%] | Wear resistance ΔH[%] | Martens hardness [N/mm$^2$] | Antifogging performance | Water contact angle [degree] | |
| | Kind | Amount (g) | HLB | Amount g) | Ratio (%) | Amount (g) | Amount (g) | | | | | | | CA$_1$ | CA$_{60}$ |
| E1 | EP1 | 5.65 | 9.6 | 0.25 | 3.5 | 1.5 | - | | 20 | 0.21 | 2.8 | 71 | Not fogged | 16.9 | 9.1 |
| E2 | EP2 | 5.65 | 9.6 | 0.25 | 3.5 | 1.5 | - | | 20 | 0.24 | 4.0 | 71 | Not fogged | 18.8 | 9.6 |
| E3 | EP3 | 5.65 | 9.6 | 0.25 | 3.5 | 1.5 | - | | 20 | 0.27 | 3.2 | 71 | Not fogged | 18.4 | 10.9 |
| E4 | EP1 | 5.65 | 6.3 | 0.25 | 3.5 | 1.5 | - | | 20 | 0.27 | 4.0 | 81 | Not fogged | 14.2 | 9.5 |
| E5 | EP1 | 5.65 | 12.1 | 0.25 | 3.5 | 1.5 | - | | 20 | 0.28 | 3.5 | 76 | Not fogged | 14.9 | 10.2 |
| E6 | EP1 | 5.65 | 15.4 | 0.25 | 3.5 | 1.5 | - | | 20 | 0.27 | 3.6 | 74 | Not fogged | 10.1 | 9.1 |
| E7 | EP1 | 5.65 | 8.1 | 0.25 | 3.5 | 1.5 | - | | 20 | 0.21 | 3.2 | 72 | Not fogged | 10.3 | 9.2 |
| E8 | EP1 | 5.65 | 9.6 | 0.5 | 6.8 | 1.5 | - | | 20 | 0.22 | 2.9 | 65 | Not fogged | 17.5 | 9.6 |
| E9 | EP1 | 5.65 | 9.6 | 0.25 | 3.5 | 1.5 | - | | 5 | 0.22 | 4.8 | 79 | Not fogged | 14.1 | 10.4 |
| E10 | EP1 | 5.65 | 9.6 | 0.25 | 3.5 | 1.5 | - | | 40 | 0.28 | 4.0 | 71 | Not fogged | 14.7 | 10.8 |
| E11 | EP1 | 5.65 | 5.0 | 0.25 | 3.5 | 1.5 | - | | 20 | 0.24 | 3.4 | 77 | Fogged | 49.2 | 29.6 |
| E12 | EP1 | 5.65 | 18.1 | 0.25 | 3.5 | 1.5 | - | | 20 | 1.52 | 3.3 | 75 | Not fogged | 20.4 | 5.6 |
| E13 | EP1 | 5.65 | 18.4 | 0.25 | 3.5 | 1.5 | - | | 20 | 2.16 | 4.0 | 72 | Not fogged | 40.9 | 15.1 |
| E14 | KX-5 | 3.60 | 9.6 | 0.01 | 3.4 | - | - | | 5 | 0.16 | 13.5 | 18 | Not fogged | 18.3 | 7.5 |
| E15 | silica | 1.07 | 9.6 | 0.06 | 2.7 | - | 3.8 | | 0.5 | 0.2 | 1.4 | 159 | Fogged | 68.0 | 61.8 |
| E1 to E15 = Example 1 to Example 15 | | | | | | | | | | | | | | | |

INDUSTRIAL APPLICABILITY

The antifogging article of the present invention has a high antifogging property and is excellent in persistence of the antifogging property, and is therefore useful as antifogging glass for a transportation apparatus such as automobile, for building, and for a commercial refrigerator with a transparent door.

**Claims**

1.   An antifogging article having a substrate and a water absorbing layer on a surface of at least a part of the substrate, wherein the water absorbing layer comprises a cured epoxy resin as a main body, obtained by reacting a polyepoxide and a curing agent, and a surfactant having an HLB within a range of 6 to 18, the HLB being calculated by a Griffin method.

2.   The antifogging article according to claim 1,
wherein the surfactant is a polyoxyalkylene alkyl ether type surfactant

3.   The antifogging article according to claim 1 or 2,
wherein a content of the surfactant is 2.0 to 20.0 mass% with respect to total solid contents of the water absorbing layer.

4.   The antifogging article according to any one of claims 1 to 3,
wherein a Martens hardness measured under measurement conditions of a load rate and unload rate F = 0.05 mN/5s and a creep C = 5s for the water absorbing layer after the antifogging article is left in an environment of 20°C and a relative humidity of 50% for 1 hour is 30 to 100 N/mm$^2$.

5.   The antifogging article according to any one of claims 1 to 4,
wherein the polyepoxide is an aliphatic glycidyl ether-based polyepoxide.

6.   The antifogging article according to any one of claims 1 to 5,
wherein the curing agent contains a polyamine compound having active hydrogen.

7.   The antifogging article according to any one of claims 1 to 6,
wherein a film thickness of the water absorbing layer is 3 to 50 μm.

8.   The antifogging article according to any one of claims 1 to 7,
wherein a water contact angle $CA_1$, measured at 1 second after dripping a water droplet of 1 μL onto the surface of the water absorbing layer after the antifogging article is left in an environment of 20°C and a relative humidity of 50% for 1 hour is 60 degrees or less, and a water contact angle $CA_{60}$ measured at 60 seconds after the dripping is 20 degrees or less.

## INTERNATIONAL SEARCH REPORT

| International application No. |
| --- |
| PCT/JP2014/068263 |

**A. CLASSIFICATION OF SUBJECT MATTER**
*B32B27/38*(2006.01)i, *B32B27/18*(2006.01)i, *C03C17/28*(2006.01)i

According to International Patent Classification (IPC) or to both national classification and IPC

**B. FIELDS SEARCHED**

Minimum documentation searched (classification system followed by classification symbols)
B32B1/00-43/00, C03C15/00-23/00

Documentation searched other than minimum documentation to the extent that such documents are included in the fields searched

| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2009/151086 A1 (Asahi Glass Co., Ltd.), 17 December 2009 (17.12.2009), entire text (Family: none) | 1-8 |
| A | JP 2008-273067 A (Asahi Glass Co., Ltd.), 13 November 2008 (13.11.2008), entire text (Family: none) | 1-8 |
| A | WO 2012/077686 A1 (Asahi Glass Co., Ltd.), 14 June 2012 (14.06.2012), entire text & US 2013/0260145 A1  & EP 2650127 A1 | 1-8 |

| ☒ | Further documents are listed in the continuation of Box C. | ☐ | See patent family annex. |

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 12 August, 2014 (12.08.14) | 02 September, 2014 (02.09.14) |

| Name and mailing address of the ISA/ Japanese Patent Office | Authorized officer |
| --- | --- |
| Facsimile No. | Telephone No. |

Form PCT/ISA/210 (second sheet) (July 2009)

**INTERNATIONAL SEARCH REPORT**

International application No.

PCT/JP2014/068263

C (Continuation).   DOCUMENTS CONSIDERED TO BE RELEVANT

| Category* | Citation of document, with indication, where appropriate, of the relevant passages | Relevant to claim No. |
|---|---|---|
| A | WO 2013/089165 A1  (Asahi Glass Co., Ltd.), 20 June 2013 (20.06.2013), entire text (Family: none) | 1-8 |
| A | WO 2011/004873 A1  (Asahi Glass Co., Ltd.), 13 January 2011 (13.01.2011), entire text (Family: none) | 1-8 |
| A | JP 57-119973 A  (Asahi Denka Co., Ltd.), 26 July 1982 (26.07.1982), entire text (Family: none) | 1-8 |
| A | JP 2008-273746 A  (Nippon Sheet Glass Co., Ltd.), 13 November 2008 (13.11.2008), entire text & WO 2007/018270 A1 | 1-8 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007052710 A